(19) **Europäisches Patentamt**

**European Patent Office**

**Office européen des brevets**

(11) Veröffentlichungsnummer: **0 174 462 B1**

(12) **EUROPÄISCHE PATENTSCHRIFT**

(45) Veröffentlichungstag der Patentschrift: **06.05.92**

(21) Anmeldenummer: **85108706.4**

(22) Anmeldetag: **12.07.85**

(51) Int. Cl.⁵: **B25J 15/04**

(54) **Werkzeugwechselvorrichtung für Industrieroboter.**

(30) Priorität: **11.09.84 DE 3433311**

(43) Veröffentlichungstag der Anmeldung:
**19.03.86 Patentblatt 86/12**

(45) Bekanntmachung des Hinweises auf die
Patenterteilung:
**06.05.92 Patentblatt 92/19**

(84) Benannte Vertragsstaaten:
**CH DE FR GB IT LI NL SE**

(56) Entgegenhaltungen:
**EP-A- 0 104 118      DE-A- 3 312 331**
**US-A- 3 289 485      US-A- 3 474 705**
**US-A- 4 216 572      US-A- 4 252 361**
**US-A- 4 310 958**

(73) Patentinhaber: **C. & E. FEIN GmbH & Co.**
**Leuschnerstrasse 41-47**
**W-7000 Stuttgart 1(DE)**

(72) Erfinder: **Boley, Dieter**
**Haldenstrasse 10**
**W-7250 Leonberg 1(DE)**
Erfinder: **Illig, Egon**
**Lortzingstrasse 28**
**W-7000 Stuttgart 1(DE)**
Erfinder: **Sturtz, Wolfgang**
**Ammerstrasse 3/1**
**W-7032 Sindelfingen(DE)**

(74) Vertreter: **Witte, Alexander, Dr.-Ing. et al**
**Witte, Weller & Gahlert Patent- und Rechts-**
**anwälte Augustenstrasse 7**
**W-7000 Stuttgart 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum Wechseln von Werkzeugen, Greifern, Schweißbrennern oder anderen mit Industrieroboter handhabbaren Einrichtungen. Sie stellt eine Trennstelle zwischen derartigen Einrichtungen und dem Industrieroboterflansch dar.

Eine Wechselvorrichtung, wie sie z.B. aus der EP-A-0 104 118 bekannt ist, besteht aus zwei Teilen, die sich beim öffnen in Ober- und Unterteil trennen. Das Oberteil bleibt am Industrieroboter, um ein Unterteil einzuwechseln. Das Unterteil wird in einem Vorrichtungsmagazin abgelegt. An diesen Unterteilen sind jeweils die o.g. Einrichtungen wie Greifer u.ä. angebracht.

Die bekannten Wechselvorrichtungen für Industrieroboter arbeiten nach unterschiedlichen Spannprinzipien und sind in ihren Funktionen oft nur für spezielle Anwendungen ausgelegt.

Sie lassen bezüglich Energie- und Signalübertragung nur ganz bestimmte Dinge zu, d.h. sind nicht erweiterbar auf beliebige andere elektrische Stecker, Druckluftübertragungselemente o.ä. ohne aufwendige mechanische Veränderungen und machen es außerdem notwendig, daß der eingesetzte Industrieroboter diese Energie- und Signalübertragungselemente bei dem Schließvorgang durch seine Bewegung selbst zusammensteckt. Dies erfordert eine präzise und zeitaufwendige Programmierung des Industrieroboters, wobei er die nötigen Kräfte aufbringen muß, ohne nennenswert nachzugeben; sowie eine sehr genaue Zentrierung des zu greifenden Teiles in einer Magazineinrichtung. Weiterhin ist beim Trennen von Ober- und Unterteil der Wechselvorrichtung ein sicheres öffnen nur mit großem Aufwand zu gewährleisten; entweder durch ein zusätzliches aktives Element wie eine Feder, einen Druckluftzylinder o.ä. oder durch Festhalten des Wechselvorrichtungsunterteils in der Ablagevorrichtung.

Der Erfindung liegt die Aufgabe zugrunde, eine Werkzeugwechselvorrichtung für Industrieroboter zu schaffen, die oben genannte Mängel nicht aufweist und die ein optimales Kosten-/Leistungsverhältnis bietet.

Gelöst wurde die Aufgabe durch die im Kennzeichen des Hauptanspruchs beschriebene Anordnung. Durch die lineare Antriebseinheit kann das hakenförmige Gebilde im Oberteil entlang einer Kulisse geführt werden, so daß das hakenförmige Gebilde zunächst eine kurvenförmige Bewegung durchführt, die im wesentlichen in Achsrichtung des Oberteils erfolgt. Diese Bewegung ist geeignet, das Unterteil an dem hierzu bestimmten Gegenstück, auch bei einer sehr großen Lageabweichung, zu greifen. Im Anschluß an das Greifen führt das hakenförmige Gebilde eine reine Linearbewegung durch, in deren Verlauf Ober- und Unterteil aneinandergezogen werden. Die vorteilhafte Anordnung von Einfahrschrägen auf den Mantelflächen von Ober- und Unterteil erleichtern das exakte Ineinandergreifen der Teile und Führungen im Oberteil leisten die Gewähr, daß Ober- und Unterteil funktionsgerecht zueinander stehen und kein zusätzlicher Kraftaufwand zum Erreichen dieser Position notwendig ist.

Durch das Vorsehen eines Ausstoßers an der linearen Antriebseinheit wird erreicht, daß die lineare Antriebseinheit beim öffnen der Wechselvorrichtung, auch beim Bestehen entgegenwirkender Reaktionskräfte, zum Trennen eingesetzt werden kann.

Die lineare Antriebseinheit kann in vorteilhafter Weise als Druckluftzylinder mit vorgespannter Feder, als doppelt wirkender Druckluftzylinder, als Hydraulikzylinder, als elektrischer Linearantrieb oder als ein Drehantrieb mit einer übersetzung für eine Linearbewegung ausgebildet sein.

Dadurch, daß die Steckverbinder direkt mit dem Ober- und Unterteil verbunden sind, wird durch die lineare Bewegung auch der Kontakt zwischen den Steckverbindern hergestellt bzw. gelöst.

Die Erfindung ist anhand eines Ausführungsbeispiels in Zeichnungen dargestellt. Es zeigen:

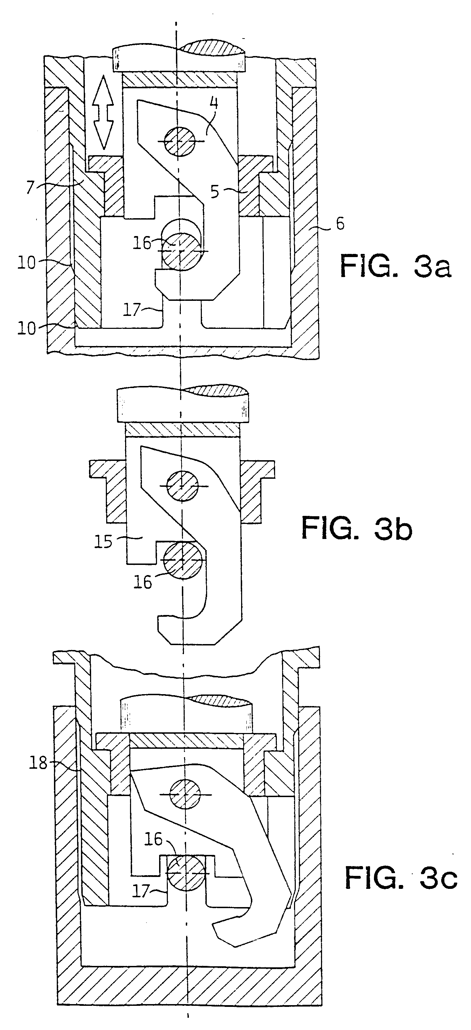

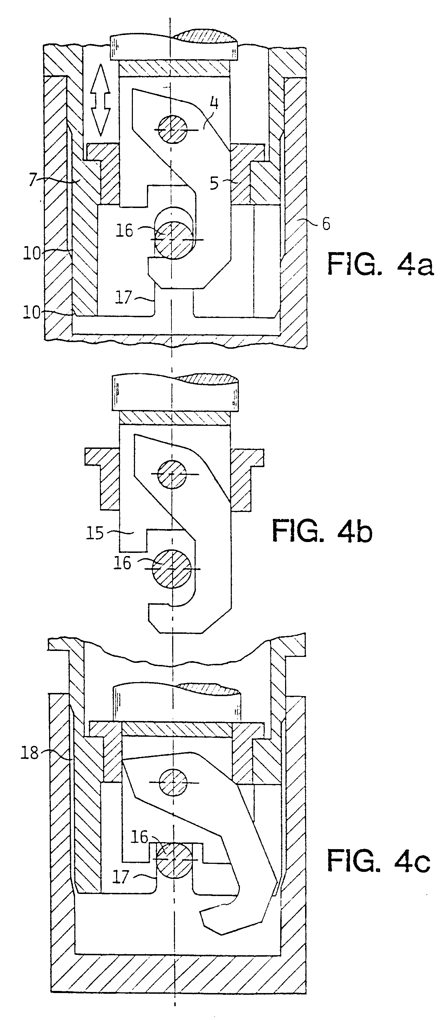

Fig. 1
einen Längsschnitt durch die eingerastete Werkzeugwechselvorrichtung
Fig. 2 a und b
einen Schnitt entsprechend Fig. 1 mit ausrasteter Werkzeugwechselvorrichtung
Fig. 3 a, b und c
einen Schnitt entsprechend Fig. 2 mit Ausstoßer
Fig. 4 a, b und c
einen Schnitt entsprechend Fig. 2 beim Schließvorgang

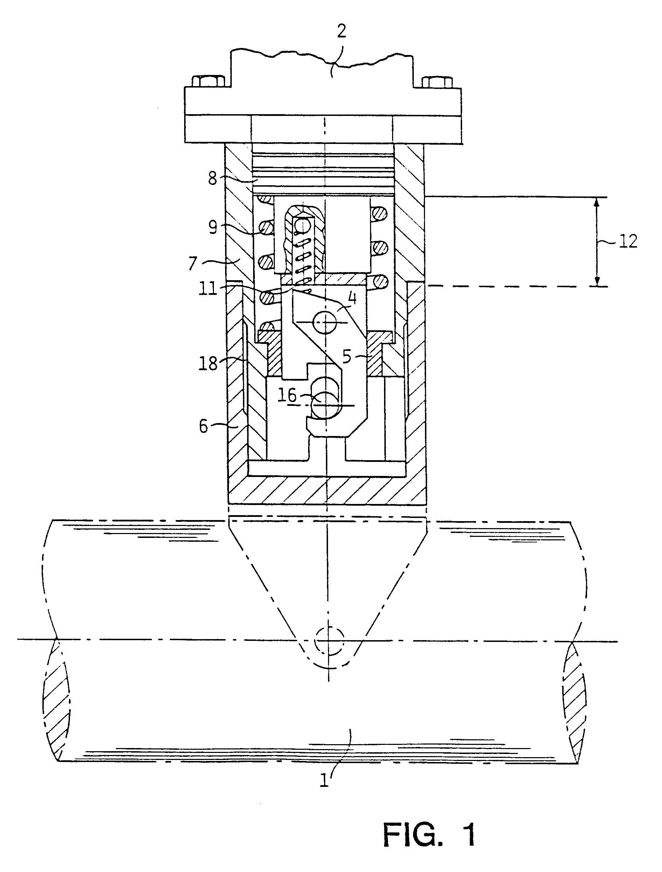

In Fig. 1 ist eine Vorrichtung zum Wechseln von Werkzeugen, Greifern, Schweißbrennern oder anderen mit Industrieroboter handhabbaren Einrichtungen 1 dargestellt. Sie stellt die Trennstelle zwischen derartigen Einrichtungen 1 und einem Industrieroboterflansch 2 dar.

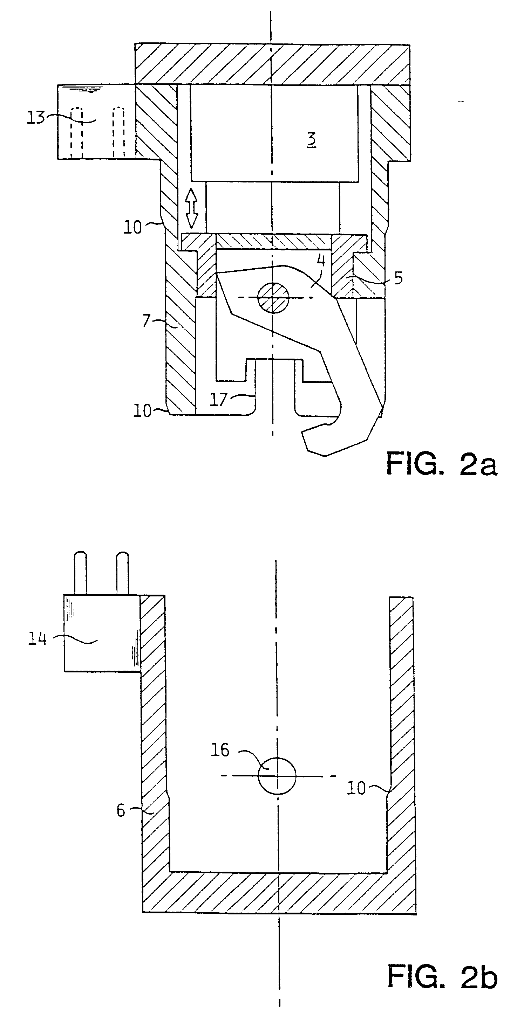

Eine Wechselvorrichtung besteht aus zwei Teilen, die sich beim öfnnen in Ober- und Unterteil trennen. Das Oberteil, wie in Fig. 2 dargestellt, bleibt am Industrieroboter, um ein Unterteil entsprechend Fig. 2 b einzuwechseln. Das Unterteil wird in einem Vorrichtungsmagazin abgelegt. An diesen Unterteilen sind jeweils die o.g. Einrichtungen 1 wie Greifer u.ä. angebracht.

Durch ein Antriebselement 3, mit dem eine Linearbewegung erzeugt wird, wird mit einem hakenförmigen Gebilde 4, das mittels einer Feder 11 gegen eine Kulisse 5 gedrückt und damit geführt wird, das Werkzeugwechselvorrichtungsunterteil nach Fig. 2 b an dem Bolzen 16 gegriffen und an das Oberteil nach Fig. 2 a herangezogen. Das Antriebselement 3 kann z.B. eine durch einen Druckluft- bzw. Hydraulikzylinder 8 vorgespannte Feder 9, wie in Fig. 1, ein doppelt wirkender Druckluft- bzw. Hydraulikzylinder, ein elektrischer Linearantrieb oder ein eine lineare Bewegung erzeugender Drehantrieb sein.

Diese lineare Bewegung beim Schließen und öffnen ist auch geeignet, die Steckverbinder 13 und 14 zur Übertragung von Signalen oder Energie miteinander zu verbinden.

Durch die Ausbildung der einander zugekehrten Mantelflächen der Gehäuse 6 und 7 von Ober- und Unterteil mit Einfahrschrägen 10 genügt zum Greifen eine sehr grobe Positionierung des Industrieroboters mit dem Wechselvorrichtungsoberteil nach Fig. 2 a über dem im Magazin befindlichen Unterteil nach Fig. 2 b. Durch einen nahezu beliebig lang wählbaren Hubweg 12 des hakenförmigen Gebildes 4 durch das Antriebselement 3, welches die Linearbewegung erzeugt, kann während des Schließvorganges der Vorrichtung auch gleichzeitig jedes an der Wechselvorrichtung angebrachte Steckelement, bestehend aus Oberteil 13 und Unterteil 14 (el. Stecker, Druckluftverbindung o.ä.), das einen gewissen Steckweg benötigt, während dem es durch Führungen 17 und 18 von außen geführt wird, geschlossen werden. Die Länge der notwendigen Führung 17 und 18 kann durch entsprechende Toleranzmaße zwischen Ober- und Unterteil beliebig gewählt werden.

Der dritte wesentliche Vorteil der Erfindung liegt in der zusätzlichen Möglichkeit, Ober- und Unterteil durch die gleiche Antriebseinheit 3, die für das Schließen verwendet wird, mit einem Ausstoßer 15 aktiv zu trennen. Es sind keine Zusatzeinrichtungen erforderlich. Der Ausstoßer drückt bei dem Lösevorgang gegen den Bolzen 16, der beim Schließen als Gegenstück zu dem hakenförmigen Gebilde 4 dient. Große Energieübertragungselemente 13, 14 erfordern nicht nur große Steckkräfte, sondern auch beachtliche Lösekräfte, und können damit ohne weiteres bei dieser Wechselvorrichtung zur Anwendung kommen.

**Patentansprüche**

1. Vorrichtung zum Wechseln von Werkzeugen, Greifern und anderen durch einen Industrieroboter handhabbaren Einrichtungen (1), umfassend ein Oberteil (7) sowie ein Unterteil (6), welche durch ein mit einem Gegenstück (16) in Eingriff bringbares hakenförmiges Gebilde (4) aneinander fixierbar sind, **dadurch gekennzeichnet,** daß das hakenförmige Gebilde (4) an einem parallel zu einer Längsachse des Oberteils (7) durch eine Antriebseinheit (3) linear verschiebbaren Element gehalten ist, daß das Oberteil (7) bei einer offenen Stellung des hakenförmigen Gebildes (4) in eine Vorjustierstellung zum Unterteil (6) bringbar ist, daß in der Vorjustierstellung das hakenförmige Gebilde (4) durch eine Relativverschiebung zu einer Kulisse (5) von der offenen Stellung in eine das Gegenstück (16) hintergreifende Zwischenstellung schwenkbar ist, daß das hakenförmige Gebilde durch eine Linearverschiebung vom Unterteil (6) weg in eine das Gegenstück (16) haltende Schließstellung bringbar ist, in welcher das Oberteil (7) und das Unterteil (6) in einer definierten Endstellung positioniert sind, daß das Oberteil und das Unterteil jeweils ein Gehäuse (7,6) mit Einfahrschrägen (10) und Führungen (17, 18) aufweisen und daß die lineare Antriebseinheit (3) mit einem Ausstoßer (15) versehen ist.

2. Vorrichtung nach Anspruch 1, dadurch gekennzeichnet, daß das hakenförmige Gebilde (4) mittels einer Feder (11) in Richtung seiner offenen Stellung beaufschlagt ist.

3. Vorrichtung nach Anspruch 1, dadurch gekennzeichnet, daß die Antriebseinheit (3) eine durch einen Druckluftzylinder (8) vorgespannte Feder (9) ist.

4. Vorrichtung nach Anspruch 1, dadurch gekennzeichnet, daß die Antriebseinheit (3) aus einem doppelt wirkenden Druckluftzylinder besteht.

5. Vorrichtung nach Anspruch 1, dadurch gekennzeichnet, daß die Antriebseinheit (3) ein Hydraulikzylinder ist.

6. Vorrichtung nach Anspruch 1, dadurch gekennzeichnet, daß die Antriebseinheit (3) ein elektrischer Linearantrieb ist.

7. Vorrichtung nach Anspruch 1, dadurch gekennzeichnet, daß die Antriebseinheit (3) ein Drehantrieb ist, der eine Übersetzung für eine Linearbewegung aufweist.

8. Vorrichtung nach Anspruch 1 bis 7, dadurch gekennzeichnet, daß die Steckverbinder (13,14) zur Übertragung von Signalen oder Energie direkt am Oberteil bzw. am Unterteil befestigt sind.

**Claims**

1. Apparatus for changing tools, grippers and other devices (1) which can be handled by an industrial robot, comprising an upper part (7) and a lower part (6) which can be fixed to one another by a hook-shaped structure (4) which can be brought into engagement with a mating part (16), characterised in that the hook-shaped structure (4) is held on an element which can be displaced linearly parallel to a longitudinal axis of the upper part (7) by an actuating unit (3), in that, in an open position of the hook-shaped structure (4), the upper part (7) can be brought into a preadjusting position relative to the lower part (6), in that, in the preadjusting position, the hook-shaped structure (4) can be swivelled, by displacement relative to a slotted link (5), from the open position into an intermediate position in which it engages behind the mating part (16), in that the hook-shaped structure can be brought by a linear displacement away from the lower part (6) into a closing position, in which it holds the mating part (16) and in which the upper part (7) and the lower part (6) are positioned in a defined end position, in that the upper part and the lower part each have a housing (7, 6) with entry bevels (10) and guides (17, 18), and in that the linear actuating unit (3) is provided with an ejector (15).

2. Apparatus according to Claim 1, characterised in that the hook-shaped structure (4) is stressed in the direction of its open position by means of a spring (11).

3. Apparatus according to Claim 1, characterised in that the actuating unit (3) is a spring (9) prestressed by a pneumatic cylinder (8).

4. Apparatus according to Claim 1, characterised in that the actuating unit (3) comprises a double-acting pneumatic cylinder.

5. Apparatus according to Claim 1, characterised in that the actuating unit (3) is a hydraulic cylinder.

6. Apparatus according to Claim 1, characterised in that the actuating unit (3) is an electric linear actuator.

7. Apparatus according to Claim 1, characterised in that the actuating unit (3) is a rotary actuator which has a transmission for a linear movement.

8. Apparatus according to Claim 1 to 7, characterised in that the plug-in connectors (13, 14) for the transmission of signals or energy are secured directly on the upper part and lower part respectively.

**Revendications**

1. Dispositif de changement d'outils, préhenseurs et autres, au moyen de dispositifs manipulables (1) actionnés par des robots industriels, comprenant une partie supérieure (7), ainsi qu'une partie inférieure (6), susceptibles d'être fixées l'une sur l'autre au moyen d'une structure en crochet (4) pouvant être mise en contact avec une contre-pièce (16), caractérisé en ce que la structure en crochet (4) est maintenue sur un élément déplaçable linéairement, parallèlement à un axe longitudinal de la partie supérieure (7), au moyen d'une unité d'entraînement (3), que, lorsque la structure en crochet (4) est en position ouverte, la partie supérieure (7) est susceptible d'être amenée en une position de préajustement, que, dans la position de préajustement, la structure en crochet (4) est susceptible de pivoter, grâce à un mouvement relatif par rapport à une coulisse (5), de la position ouverte à une position intermédiaire, assurant une saisie de l'arrière de la contre-pièce (16), que la structure en crochet est susceptible d'être amenée, grâce à un mouvement linéaire de la partie inférieure (6) produisant un écartement, dans une position de fermeture, assurant le maintien de la contre-pièce (16), dans laquelle la partie supérieure (7) et la partie inférieure (6) sont positionnées dans une position finale définie, que la partie supérieure et la partie inférieure présentent chacune un carter (7,6) équipé de pentes d'introduction (10) et de guidage (17,18) et que l'unité d'entraînement linéaire (3) est pourvue d'un éjecteur (15).

2. Dispositif selon la revendication 1, caractérisé en ce que la structure en crochet (4) est sollicitée en direction de sa position ouverte au moyen d'un ressort (11).

3. Dispositif selon la revendication 1, caractérisé en ce que l'unité d'entraînement (3) est un ressort (9) précontraint au moyen d'un vérin à air comprimé (8).

4. Dispositif selon la revendication 1, caractérisé en ce que l'unité d'entraînement (3) est composée d'un vérin à air comprimé, à double action.

5. Dispositif selon la revendication 1, caractérisé en ce que l'unité d'entraînement (3) est un vérin hydraulique.

**6.** Dispositif selon la revendication 1, caractérisé en ce que l'unité d'entraînement (3) est un entraînement linéaire électrique.

**7.** Dispositif selon la revendication 1, caractérisé en ce que l'unité d'entraînement (3) est un entraînement rotatif, qui présente une transmission fournissant un mouvement linéaire.

**8.** Dispositif selon les revendications 1 à 7, caractérisé en ce que des raccords à prise (13,14) servant à la transmission de signaux ou d'énergie sont directement fixés sur la partie supérieure, respectivement la partie inférieure.

FIG. 1

13

3

10

4

5

7

17

10

FIG. 2a

14

16

6

10

FIG. 2b

FIG. 3a

FIG. 3b

FIG. 3c

FIG. 4a

FIG. 4b

FIG. 4c